# EUROPÄISCHE PATENTSCHRIFT

(11) **EP 0 453 709 B1**
(45) Veröffentlichungstag und Bekanntmachung des Hinweises auf die Patenterteilung: **01.03.1995**
(21) Anmeldenummer: 91100547.8
(22) Anmeldetag: 18.01.1991
(51) Int. Cl.: G01F 9/00, G01F 17/00, G01F 23/14

(54) **Vorrichtung zum Messen des Anteils von flüssigem Brennstoff in einem Brennstofftank**
Device to measure the content of liquid fuel in a fuel tank
Dispositif pour mesurer la teneur en carburant liquide dans un réservoir de carburant

(30) Priorität: 21.04.1990 DE 4012745
(43) Veröffentlichungstag der Anmeldung: 30.10.1991
(73) Patentinhaber: PIERBURG GMBH, 41460 Neuss (DE)
(72) Erfinder: Härtel, Günter, W-4040 Neuss 21 (DE)

(56) Entgegenhaltungen:
- WO-A-86/03834
- DE-C- 2 953 903

## Beschreibung

Die Erfindung betrifft eine Vorrichtung zum Messen des Anteils von flüssigem Brennstoff in einem Brennstofftank nach dem Oberbegriff des Patentanspruchs 1.

Eine derartige Vorrichtung ist Gegenstand der DE-C2 29 53 903, und es ist bekannt, zum Bestimmen des Brennstoff-Füllstandes aus einer vorgegebenen Kolbenbewegung und der dadurch im Brennstofftank erfolgenden Druckänderung auf den tatsächlichen Füllstand zu schließen, wobei zum Erfassen der Druckänderung als Füllstandsgröße ein Druckaufnehmer vorgesehen ist.

Je nach Brennstoffsiedelage und -temperatur stellt sich im Tank Brennstoffdampf ein bzw. kann bei der erwähnten Messung durch die bei der Kolbenbewegung erfolgende Druckänderung der Brennstoff-Siededruck über oder unterschritten werden, wodurch die Signale des Druckaufnehmers nicht ausreichend genau die Bestimmung des Brennstoff-Füllstandes ermöglichen.

Es ist daher Aufgabe der Erfindung, eine gattungsgemäße Vorrichtung derart zu gestalten, daß Messungen bis in die Nähe des Brennstoff-Siededruckes möglich werden, wobei darüber hinaus eine kurze Meßzeit erreicht werden soll.

Diese Aufgabe ist bei der angegebenen Vorrichtung durch die im Kennzeichen des Patentanspruchs 1 angegebenen Merkmale gelöst worden. Der Unteranspruch nennt eine vorteilhafte Weiterbildung der Erfindung.

Mit der Erfindung erzielbare Vorteile sind in der nachfolgenden Beschreibung zweier Ausführungen angegeben, die in der Zeichnung dargestellt sind.

Diese zeigt:
Fig. 1 eine erfindungsgemäße Vorrichtung;
Fig. 2 die Vorrichtung nach Fig. 1 mit Druckspeicher.

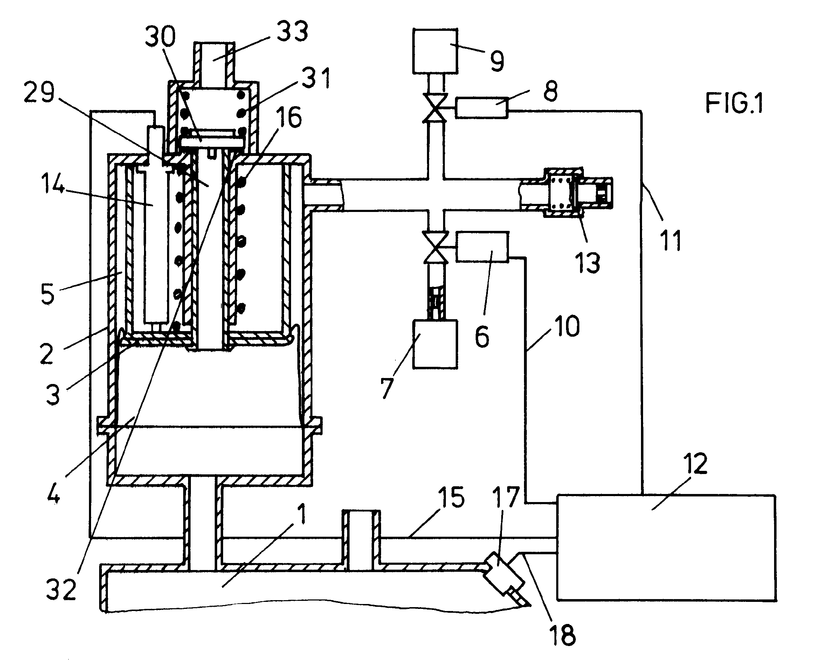

Fig. 1 zeigt eine Ausführung der erfindungsgemäßen Vorrichtung an einem Brennstofftank 1, an dem ein Meßzylinder 2 angeordnet ist, der durch einen Kolben 3 in zwei Teilkammern 4, 5 unterteilt ist.
Die erste Teilkammer 4 ist an den gasgefüllten Tankraum 1 angeschlossen und die zweite Teilkammer 5 über ein erstes Schaltventil 6 an eine Unterdruckquelle 7, z. B. dem Saugrohr einer Brennkraftmaschine, anschließbar und über ein zweites Schaltventil 8 mit einer gegenüber der Unterdruckquelle 7 höheren Druck aufweisenden Druckquelle 9, z. B. der Atmosphäre. Beide Schaltventile 6, 8 sind über elektrische Leitungen 10, 11 mit einem elektrischen Steuergerät 12 verbunden. Der Unterdruck in der Teilkammer 5 kann durch ein federbelastetes Ventil 13 begrenzt sein.
In der zweiten Teilkammer 5 ist ein Wegaufnehmer 14 für den Kolben 3 angeordnet, dessen Ausgangssignal über eine elektrische Leitung 15 dem elektronischen Steuergerät 12 zugeführt wird. Je nach Bedarf ist der Kolben 3 mit einer entgegen der Wirkung der Unterdruckquelle 7 wirkenden Feder 16 belastet.
Im gasgefüllten Tankraum ist ein Druckaufnehmer 17 angeordnet, der über eine elektrische Leitung 18 ebenfalls mit dem Steuergerät 12 verbunden ist.

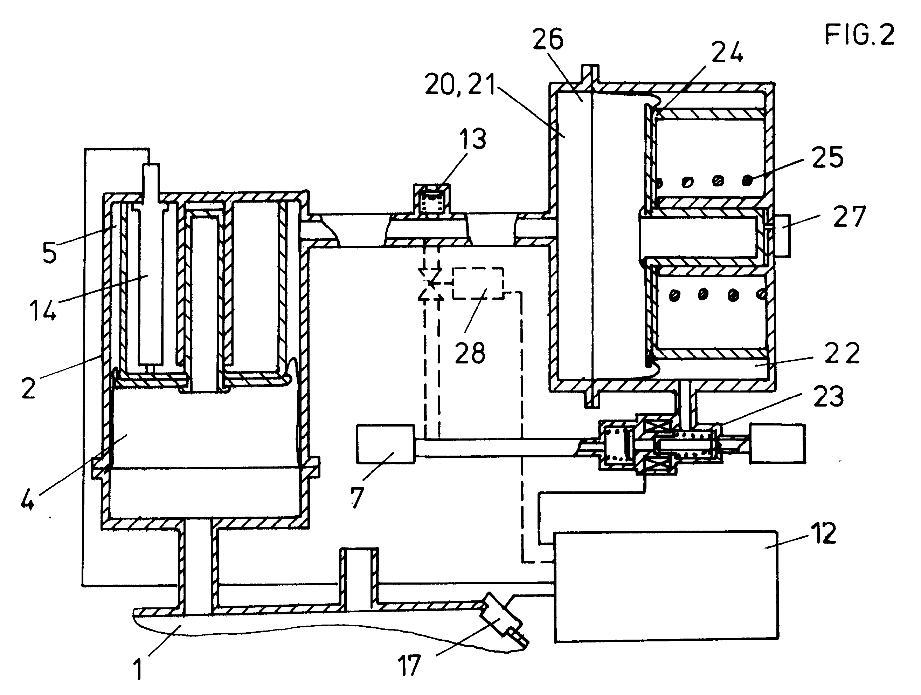

Fig. 2 zeigt eine Ausführung, bei der der Meßzylinder 2 für den Anschluß an eine gegenüber der Atmosphäre Überdruck erzeugenden Druckquelle ausgebildet ist. Die Druckquelle 20 wird hier von einem Druckspeicher 21 gebildet, der durch niedrigen Druck, z. B. dem des Saugrohrs der Brennkraftmaschine, gespannt wird.

### Funktion

Die Vorrichtung nach Fig. 1 ist in Meßbereitschaft dargestellt, d. h. das erste Schaltventil 6 ist für den Durchgang des Unterdruckes geschaltet, der die Teilkammer 5 beaufschlagt und den Kolben 3 entgegen der Federkraft in seiner oberen Endstellung hält. Diese Endstellung wird durch den Wegaufnehmer 14 erfaßt und als Meßbereitsignal an das Steuergerät 12 gemeldet. Danach kann das Schaltventil 6 den Durchgang des Unterdrucks unterbrechen.

Bei einer Messung gibt das Steuergerät 12 gleichzeitig über die elektrischen Leitungen 10, 11 Signale an die Schaltventile 6 und 8 aus, wodurch der Durchgang des Unterdruckes gesperrt und der des höheren Druckes über das Schaltventil 8 freigegeben wird. Nicht dargestellte Überdruckventile bzw. Belüftungsleitungen des Brennstofftanks werden geschlossen.
Der höhere Druck gelangt in die zweite Teilkammer 5, so daß der Kolben 3 unter der Kraft der Feder 16 aus seiner Endstellung bewegt wird. Bei dieser Bewegung drückt der Kolben 3 Gas in den Tankraum 1 bzw. verkleinert der Kolben 3 das Volumen des gasgefüllten Tankraumes 1, wodurch der im Tankraum herrschende Druck im Verhältnis der Volumenverringerung steigt, bis die dadurch einsetzende Druckerhöhung einen vorgegebenen Differenzbetrag zwischen Druck vor und Druck nach der Kolbenbewegung überschritten hat. Wird dieser Differenzbetrag erreicht, wird der durch den Wegaufnehmer 14 erfaßte Kolbenweg dem Steuergerät 12 über die elektrische Leitung 15 zugeführt und in diesem zu einem Ausgangssignal verarbeitet, das die Anzeige des Anteils von flüssigem Brennstoff im Tank ermöglicht.

Sobald dieses Ausgangssignal vorliegt, kann der Meßvorgang abgebrochen werden. Dafür werden vom Steuergerät 12 Signale an die Schaltventile 6 und 8 ausgegeben, so daß das Schaltventil 8 den Durchgang des höheren Druckes sperrt und das Schaltventil 6 den des Unterdruckes öffnet und dadurch der Kolben 3 wieder die Stellung für Meßbereitschaft einnimmt.

Die Fig. 2 zeigt den Kolben 3 in Endstellung, die der Kolben entgegen Feder- und/oder Schwerkraft unter der Wirkung von Unterdruck in der zweiten Teilkammer 5 eingenommen hat. Dieser Unterdruck entstand durch Anschluß einer Arbeitskammer 22 des Druckspeichers 21 an die Unterdruckquelle, z. B. das Saugrohr 7, über ein Umschaltventil 23, wodurch ein Kolben 24 des Druckspeichers 21 gegen eine Feder 25 bewegt und dadurch Luft aus der Teilkammer 5 in eine weitere Kammer 26 des Druckspeichers 21 abgesaugt wurde. Der Kolben 24 des Druckspeichers 21 ist in seiner gespannten Stellung dargestellt, wobei diese Endstellung ggf. durch einen Endlagenschalter 27 an das Steuergerät 12 gemeldet wird. Der in der Teilkammer 5 wirkende Unterdruck ist durch das Belüftungsventil 13 begrenzt, womit auch sichergestellt ist, daß der Druckspeicher 21 ausreichend Luft speichern kann. Aus dieser Stellung erfolgt die Messung durch Schalten des Umschaltventils 23 auf Durchgang für Atmosphärenluft, wodurch sich der Druckspeicher 21 entspannt und die in Kammer 26 gespeicherte Luft komprimiert und in die Teilkammer 5 drückt.
Durch den bereitgestellten Druck wird der Kolben 3 im Meßzylinder 2 bewegt, bis die dadurch im Tankraum einsetzende Druckerhöhung den vorgegebenen Differenzbetrag zwischen Druck vor und Druck nach der Kolbenbewegung überschritten hat.
Die Kolbenbewegung wird über den Wegaufnehmer 14 erfaßt, dem Steuergerät 12 gemeldet und im Steuergerät 12 ausgewertet, wie zu Fig. 1 beschrieben.

Nach beendeter Messung wird das Umschaltventil 23 geschaltet und der Druckspeicher 21 mit Unterdruck beaufschlagt, so daß die dargestellten Positionen der Kolben 3 und 24 des Meßzylinders 2 und des Druckspeichers 21 eingenommen werden, wobei der Endlageschalter 27 Meßbereitschaft meldet. Aufgrund des fest in den Kammern 5 und 26 eingeschlossenen Luftvolumens findet zwischen den Meßzyklen lediglich ein Gaspendeln statt.
Ein zusätzlich vorsehbares Schaltventil 28, gestrichelt dargestellt, kann sicherstellen, daß das für die Funktion notwendige Gesamtluftvolumen eingeschlossen wird. Bei Verwendung des Schaltventils 28 kann dieses durch Steuersignale des Steuergerätes 12 derart wirken, daß der in der Teilkammer herrschende Druck immer dann, wenn Meßbereitschaft signalisiert wird, über einen Belüftungsanschluß auf Atmosphärendruck gebracht wird.
Hierdurch wird einmal sichergestellt, daß sich ein ausreichendes Gesamtluftvolumen in den Kammern 5 und 26 befindet, und zum anderen ist es dadurch in Ausgestaltung der Erfindung möglich, das nicht dargestellte Überdruckventil in den Meßzylinder 2 zu integrieren (Fig. 2). Neben einer Verringerung des Bauaufwandes hat dies den Vorteil, daß es während des Meßvorganges zu keiner Überschneidung mit der Überdruckregelung kommt, womit Meßfehler vermieden werden. Hierfür ist eine Kolbenführung 29 als Rohr ausgebildet, das sich in seiner Meßbereitstellung auf einem Schließkörper 30 abstützt. Der Schließkörper 30 wird durch die Kraft einer Feder 31 auf einen Ventilsitz 32 gedrückt. Ab einem bestimmten Differenzdruck zwischen Tankdruck und Teilkammerdruck wird der Schließkörper 30 vom Ventilsitz 32 abgehoben, so daß Überschußdampf aus dem Tankraum 1 über die Teilkammer 4 und das Rohr über einen Anschluß 33 zur Atmosphäre bzw. zu einem Aktivkohlebehälter gelangt.

Es versteht sich, daß die Ausführung nach Fig. 1 ebenfalls mit einem Druckspeicher betrieben werden kann.

Zur Vermeidung von dynamischen Effekten können in den Leitungen Drosselabschnitte vorgesehen sein. Die Auswertung der Wegaufnehmersignale kann in beliebiger Weise erfolgen, z. B. kann diese auch bereits bei hinreichend verlangsamter Kolbenbewegung (Gradient: Membranweg/Zeit) erfolgen.

Beide Vorrichtungen nach Fig. 1 und 2 ermöglichen z. B. im Rahmen einer Borddiagnose eine Prüfung der Brennstofftankdichtheit. Hierbei wird nach vorliegendem Maß der Kolbenverstellung, das als Maß für den mit Brennstoff gefüllten Tankraum gewertet wird, der Meßvorgang bei geschlossenen Überdruckventilen bzw. Belüftungsleitungen über eine weitere Zeitspanne aufrechterhalten und eine sich ggf. einstellende Verschiebung des Kolbens pro Zeiteinheit als Maß für eine Entleerung des Brennstofftanks gewertet. Diese Entleerung kann entstehen durch Brennstoffentnahme für die Brennkraftmaschine, Brennstoffleckage aus Tank und Anschlußleitungen und durch Leckage von Brennstoffdampf, die an den Überdruckventilen bzw. Belüftungsleitungen des Brennstofftanks bestehen kann.

Die aus der Verschiebung des Kolbens pro Zeiteinheit ermittelte Entleerung des Brennstofftanks ist vorteilhafterweise um den Anteil zu reduzieren, der dem im Steuergerät berechneten Brennstoffverbrauch der Brennkraftmaschine entspricht.

Diese letzte Maßnahme erübrigt sich, wenn der Meßvorgang insgesamt oder nach vorliegendem Ausgangssignal für die Anzeige des flüssigen Brennstoffanteils im Tank bei abgestellter Brennkraftmaschine erfolgt.

Die neue Vorrichtung ermöglicht eine Messung des Füllstandes unabhängig von den vor der Messung im gasgefüllten Tankraum herrschenden Drücken bis in die Nähe des Brennstoffsiededruckes bei kurzen Meßzeiten.

Die neue Vorrichtung ermöglicht z. B. im Rahmen einer Borddiagnose eine Prüfung der Brennstofftankdichtheit.

## Patentansprüche

1. Vorrichtung zum Messen des Anteils von flüssigem Brennstoff in einem Brennstofftank, bestehend aus einem Zylinder, der durch einen Kolben (3) in zwei Teilkammern (4,5) unterteilt ist, von denen die erste Teilkammer (4) an den gasgefüllten Tankraum (1) angeschlossen ist und die zweite Teilkammer (5) an eine Druckquelle (7) derart anschließbar ist, daß sich der Kolben unter dem Einfluß der Druckquelle aus einer definierten Ruhestellung in eine Endstellung bewegt, weiter bestehend aus einem Druckaufnehmer (17), der die dabei bei verschlossenem Brennstofftank auftretende Druckänderung im gasgefüllten Tankraum erfaßt, dadurch gekennzeichnet, daß für die Druckänderung ein festgelegter Differenzbetrag vorgesehen ist, daß ein Wegaufnehmer (14) vorgesehen ist, der den während dieser Druckänderung zurückgelegten Kolbenweg erfaßt, der als Maß für den mit Brennstoff gefüllten Tankraum gewertet wird.

2. Vorrichtung nach Anspruch 1, dadurch gekennzeichnet, daß die Druckquelle von einem Druck- bzw. Unterdruckspeicher (21) gebildet wird, der durch niedrigeren Druck (Unterdruck) gespannt wird.

3. Vorrichtung nach Anspruch 1 oder 2, dadurch gekennzeichnet, daß der Kolben (3) in Ruhe- bzw. Meßbereitstellung auf den Tankraumdruck ansprechend ein Belüftungsventil (30, 32) eines Anschlusses (33) betätigt, der zur Atmosphäre bzw. zu einem Aktivkohlebehälter führt.

4. Vorrichtung nach einem der Ansprüche 1 bis 3, dadurch gekennzeichnet, daß nach vorliegendem Maß der Kolbenverstellung, das als Maß für den mit Brennstoff gefüllten Tankraum gewertet wird, der Meßvorgang über eine weitere Zeitspanne aufrecht erhalten wird und die sich ggf. einstellende Verschiebung des Kolbens pro Zeiteinheit als Maß für eine Entleerung des Brennstofftanks gewertet wird, die durch Brennstoffentnahme für die Brennkraftmaschine, Brennstoffleckage aus Tank und Anschlußleitungen und durch Leckage von Brennstoffdampf am Umschaltventil (7) und den geschlossenen Überdruckventilen bzw. Belüftungsleitungen des Brennstofftanks hervorgerufen wird.

5. Vorrichtung nach Anspruch 4, dadurch gekennzeichnet, daß die Verschiebung des Kolbens pro Zeiteinheit bzw. das Maß für die Tankentleerung um den Anteil reduziert wird, der dem im Steuergerät berechneten Brennstoffverbrauch der Brennkraftmaschine entspricht.

6. Vorrichtung nach Anspruch 4, dadurch gekennzeichnet, daß der Meßvorgang insgesamt oder nur nach vorliegendem Ausgangssignal für die Anzeige des flüssigen Brennstoffanteils im Tank bei abgestellter Brennkraftmaschine erfolgt.

## Claims

1. A device for measuring the content of liquid fuel in a fuel tank, comprising a cylinder, which is divided by a piston (3) into two partial chambers (4, 5), of which the first partial chamber (4) is connected to the gas-filled tank chamber (1) and the second partial chamber (5) is connectable to a pressure source (7) in such a manner that the piston moves under the influence of the pressure source from a defined inoperative position into an end position, further comprising a pressure recorder (17), which detects the pressure change in the gas-filled tank chamber brought about by the moving piston when the fuel tank is sealed, characterised in that a fixed differential amount is provided for the pressure change, a distance recorder (14) is provided which detects the distance travelled by the piston during this pressure change, which distance is taken as a measure for the tank chamber filled with fuel.

2. A device according to claim 1, characterised in that the pressure source is formed by a pressure or underpressure store (21), which is acted upon by low pressure (underpressure).

3. A device according to claim 1 or 2, characterised in that, in the inoperative or ready-for-measurement position, the piston (3) actuates an aerating valve (30, 32) of a connection (33) leading to the atmosphere or to an activated carbon receptacle in response to the tank chamber pressure.

4. A device according to one of claims 1 to 3, characterised in that, once the degree of the piston displacement has been determined, which is taken as a measure for the tank chamber filled with fuel, the measurement procedure is maintained for a further period of time and any occurring displacement of the piston per unit of time is taken as a measure for a drainage of the fuel tank, which is brought about by fuel removal for the internal combustion engine, fuel leakage from the tank and connecting lines and by leakage of fuel vapour at the switch-over valve (7) and the closed excess pressure valves or aerating lines of the fuel tank.

5. A device according to claim 4, characterised in that the displacement of the piston per unit of time or the measure for the tank drainage is reduced by the amount corresponding to the fuel consumption of the internal combustion engine calculated in the control device.

6. A device according to claim 4, characterised in that the measurement procedure is effected in its entirety when the internal combustion engine is switched off or only after the presence of an output signal for the display of the liquid fuel content in the tank.

## Revendications

1. Dispositif pour mesurer la part de combustible liquide dans un réservoir de carburant, composé d'un cylindre subdivisé par un piston (3) en deux compartiments partiels (4, 5), dont le premier (4) est raccordé au réservoir (1) rempli de gaz, et le second (5) peut être relié à une source de pression (7), de sorte que le piston se déplace d'une position de repos définie dans une position extrême sous l'effet de la source de pression, composé par ailleurs d'un capteur de pression (17), qui détermine la variation de pression dans le réservoir rempli de gaz, produite en position de fermeture du réservoir de carburant, caractérisé en ce qu'une valeur différentielle définie est fixée pour la variation de pression, en ce qu'un capteur de déplacement (14), prévu, détermine la trajectoire parcourue par le piston pendant cette variation de pression, la trajectoire étant appréciée comme mesure du réservoir rempli de combustible.

2. Dispositif suivant la revendication 1, caractérisé en ce que la source de pression est formée par un accumulateur de pression et/ou de dépression (21), alimenté en pression relativement basse (dépression).

3. Dispositif suivant l'une des revendications 1 ou 2, caractérisé en ce que le piston (3), en position de repos et/ou d'attente de mesure, actionne une soupape d'aération (30, 32) d'un raccord (33), en réponse à la pression dans le réservoir, ce raccord menant à l'atmosphère et/ou à un réservoir de charbon actif.

4. Dispositif suivant l'une quelconque des revendications 1 à 3, caractérisé en ce que, en présence de la valeur du déplacement du piston, appréciée comme mesure du réservoir rempli de combustible, l'opération de mesure est maintenue sur un autre intervalle de temps, et le déplacement du piston par unité de temps, éventuellement établi, est apprécié comme mesure d'une vidange du réservoir de carburant, provoquée par la reprise de combustible pour le moteur à combustion interne, des fuites de combustible du réservoir et des conduites de raccordement, et par des fuites de vapeur de combustible sur la soupape d'inversion (7) et les soupapes de sûreté fermées et/ou les conduites d'aération du réservoir de carburant.

5. Dispositif suivant la revendication 4, caractérisé en ce que le déplacement du piston par unité de temps et/ou la mesure de la vidange du réservoir sont réduits de la part, correspondante à la consommation de combustible du moteur à combustion interne, calculée dans l'appareil de commande.

6. Dispositif suivant la revendication 4, caractérisé en ce que l'opération de mesure est assurée dans son ensemble, ou seulement en présence du signal de sortie pour l'affichage de la part de combustible liquide dans le réservoir, à l'arrêt du moteur à combustion interne.
